# EUROPEAN PATENT SPECIFICATION

(11) **EP 1 150 858 B1**
(45) Date of publication and mention of the grant of the patent: **04.05.2005**
(21) Application number: 00901325.1
(22) Date of filing: 11.01.2000
(51) Int. Cl.: B60L 5/16

(54) **TROLLEY FOR TROLLEY-BUS AND TRAM PROVIDED WITH PNEUMATIC CONTROL MEANS AND CENTERING DEVICE FOR ITS MECHANICAL OPERATION**
STROMABNEHMER FÜR OBERLEITUNGSBUS UND STRASSENBAHN MIT PNEUMATISCHER KONTROLLEINRICHTUNG UND ZENTRIERVORRICHTUNG ZU IHRER MECHANISCHEN BETÄTIGUNG
TROLLEY POUR TROLLEYBUS ET TRAMWAY MUNI D'UN ORGANE DE COMMANDE PNEUMATIQUE ET D'UN DISPOSITIF DE CENTRAGE POUR SON FONCTIONNEMENT MECANIQUE

(30) Priority: 13.01.1999 IT NA990001
(43) Date of publication of application: 07.11.2001
(73) Proprietor: Imperatore, Gianni, 80014 Giugliano (IT)
(72) Inventor: Imperatore, Gianni, 80014 Giugliano (IT)
(74) Representative: Cirillo, Gennaro
(86) International application number: PCT/IT2000/000010
(87) International publication number: WO 2000/041908

(56) References cited:
- EP-A- 0 015 854
- DE-B- 1 036 905

## Description

The electric energy for the operation of a trolley-bus is picked up through two poles carried on the roof of the car and connecting the same to the electric line by a cable passing therethrough.
The two poles are sloped with respect both to the car and the electric line with which they are in electric contact. They are kept in contact with the electric line by suitable springs that prevent them from jumping off the line because of the road unevenness.
Suitable collector shoes provided with races and placed at the end of the poles ensure the sliding contacts with the trolley line.

A trolley with the features of the preamble of claim 1 is described in EP-A-0 015 854.
The problems connected with such types of trolleys arise from the poor contact of the shoes with the trolley line because of the road unevenness as well as the behaviour of the poles in case the shoes glide away from the trolley line.

The present industrial invention seeks to provide a trolley that follows satisfactorily the movements of the poles in case of misalignment with the trolley line.
Another object is to guarantee that the connection to the trolley line is made so as to bear the unevenness of the road.
A further object of the invention is to provide a trolley able to allow the poles to be put close to the trolley line or lowered therefrom both manually and automatically.
These objects are achieved according to the solution proposed by the present invention by using a pneumatic control means and a centering device controlled by an electronic processing unit.

Such a solution will be more readily understood with reference to the annexed drawings showing an embodiment of the invention by way of a not limiting example. In the drawings:

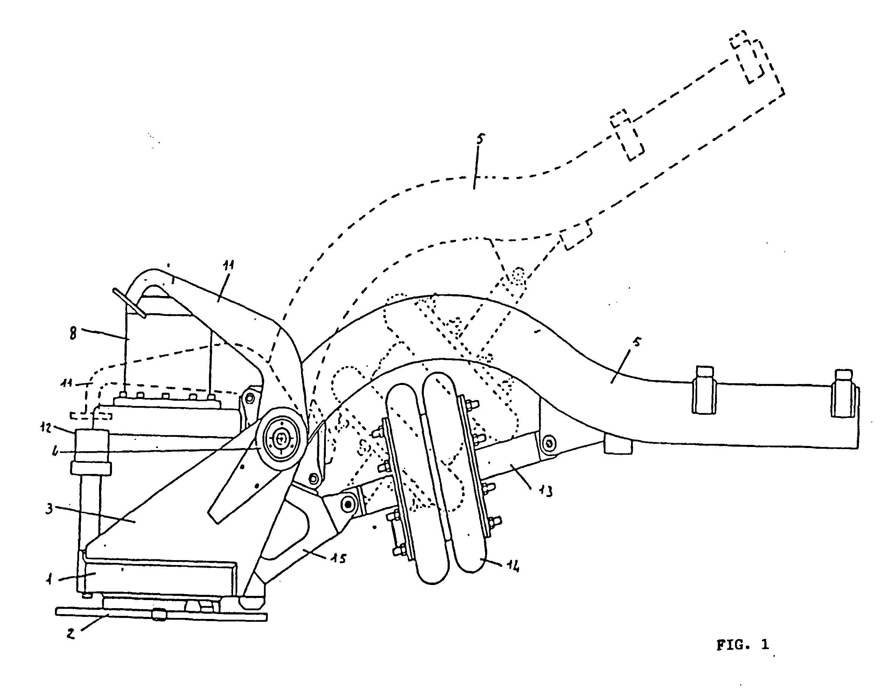

Fig. 1 shows a side view of the initial portion of a trolley connected to the pneumatic control means and the centering device,

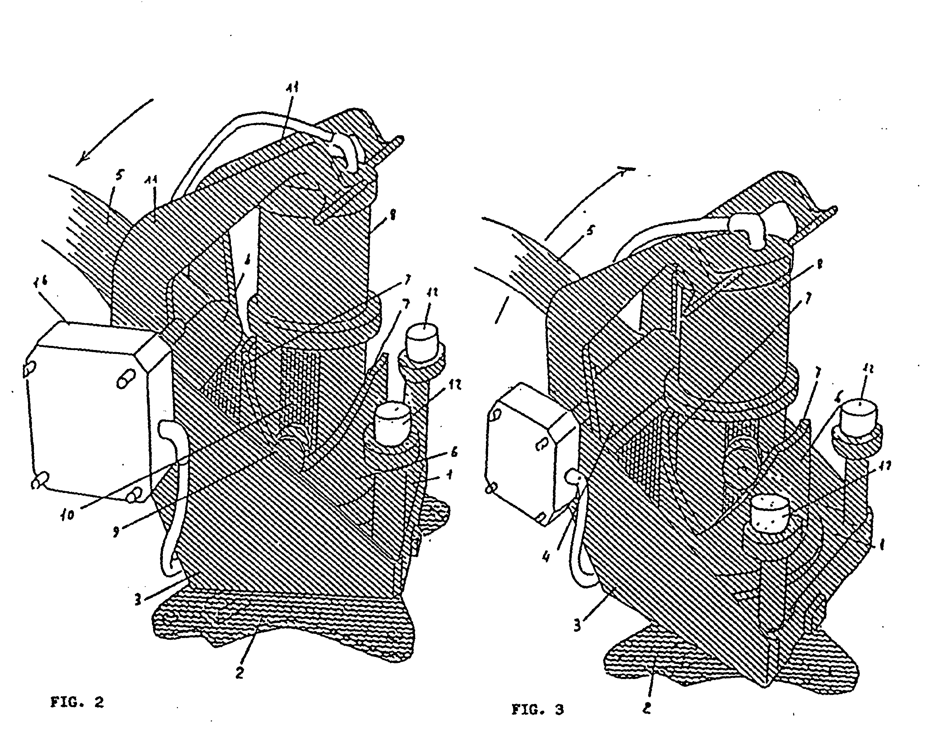

Figs. 2 and 3 show the centering device in two different operating positions.

The centering device consists of a base plate or platform (1) that can rotate with respect to a base (2) and is connected to side frames (3) supporting axis of rotation (4) of trolley poles (5).
A cylindrical cam (6) has a side face provided with two opposite concave V-shaped lobes (7). Placed within said cylindrical cam is a cylindrical turret (8) including a reciprocating piston and carrying at its one end a double pin (9) sliding within two opposite longitudinal grooves (10) formed in the side face of such cylindrical turret and having half a length of the same.
The centering device also includes the shaped rods (11) for the mechanical stop at the end of the stroke against abutting blocks (12) in order to limit the maximum rotation of the trolley poles.
A rod (13) connects, with the interposition of toroidal pneumatic control means (14), pole (5) to support bracket (15) connected to platform (1). A brake device (16) is provided alon an extension of axis of rotation (4). The centering device also includes an angle sensor located near axis of rotation (4) and a centering sensor located at the rear portion of stationary base plate (2).
After having described and shown the above embodiment, the operation of the subjected trolley is as follows.
Lifting and lowering of the rods is carried out by the pneumatic control means by feeding and exhausting air, respectively.
The pneumatic centering device controls the misalignment by the combined action of the cylindrical cam and the double pin sliding into the longitudinal grooves of turret (8).
In case the trolley rotates, the cylindrical cam rotates in turn and contacts the double pin that either moves or opposes against such movement according to whether compressed air is present or not within the operation cylinder, i.e. according to the operating conditions.
Upon combining the actions of the toroidal pneumatic control means and the centering device it is possible to control the various mechanical operations of the trolley by controlling an electronic processing unit, and namely:
- following the movement of the poles in case of misalignment of the trolley line;
- ensuring that the connection to the trolley line is such as to bear defects of the contact lines and road unevenness;
- putting close the trolleys to the trolley line or lowering the same therefrom both manually and automatically;
- lowering automatically the poles in case the trolleys glide away from the trolley line.
The angle sensor located near the axis of rotation and the trolleys has the function of generating a signal in case the poles are in their rest position, i.e. completely lowered, in their intermediate position or in the position of their maximum elongation.
The sensor located at the base of the platform is operated only when the lower ends of the trolleys are parallel to the central line of the car. Therefore, it has the function of centering device.
The trolley described and illustrated relates to an application for trolley-bus, however, it is evident that the same invention may also relate to an application for a tram.
The present invention may also be changed and modified by those skilled in the art without departing from its scope, which is defined by the appended claims.

## Claims

1. A trolley for trolley-bus and tram controlled by a pneumatic control means (14) and a centering device **characterized in that** said pneumatic control means and centering device are both controlled by an electronic processing unit, said pneumatic control means (14) being of the known type, the centering device being formed of a cylindrical cam (6) located on a rotatable base plate or platform (1) connected to the trolley poles (5), said cam (6) having a side surface formed by two opposite V-shaped lobes (7) and causing by its rotation the shift of a double pin (9) which freely slides into two opposite grooves (10) located along the side surface of a turret (8) which is concentric with the cylindrical cam (6) and within which a pneumatically operated piston reciprocates.

2. The trolley of claim 1, **characterized in that** the pole (5) is hinged to the rotatable base plate or platform (1) by an axis of rotation (4) about which it can rotate so as to be lifted and lowered, a braking system (16) being provided on an extension of said axis of rotation (4).

3. The trolley of the preceding claims, **characterized in that** the braking system (16) limits and blocks the elongation of the pole (5) when the trolley glides away from the line.

4. The trolley of the preceding claims, **characterized in that** the rotatable base plate has limit blocks against which suitable shaped rods (11) located at both ends of the axis of rotation (4) of the trolley pole (5) can abut.

5. The trolley of the preceding claims, **characterized in that** the pneumatic control means (14) is located on an axis subtending the trolley pole (5).

6. The trolley of the preceding claims, **characterized in that** it is provided with suitable position sensors able to generate a signal in every position taken by the pole (5) and to allow for its movements.

7. The trolley of the preceding claims, **characterized in that** it is provided with a suitable electronic processing unit able to detect whenever the trolley glides away from the line by the variations of its angle position in time.

8. The trolley of the preceding claims, **characterized in that** it is provided with a suitable electronic processing unit able to detect (in case of a trolley-bus) whenever the trolleys glide away from the line by the variations of their inclination.

## Patentansprüche

1. Stangenstromabnehmer für Oberleitungsomnibus oder Trolleybus und Strassenbahnwagen, der von einem pneumatischen Steuergerät (14) und einer Zentrierungseinrichtung gesteuert wird, **dadurch gekennzeichnet, daß** das pneumatische Steuergerät sowie die Zentrierungseinrichtung von einer elektronischen Datenverarbeitungseinheit gesteuert werden, wobei das pneumatische Steuergerät (14) herkömmlich ist und die Zentrierungseinrichtung von einem zylindrischen Nocken (6) ausgebildet ist, der mit einer mit der Stromabnehmerstange (5) verbundenen, verschwenkbaren Grundplatte (1) zusammengebaut ist, wobei der Nocken (6) eine von zwei entgegengesetzten V-förmigen Nasen (7) gebildete Seitenfläche aufweist und durch sein Verschwenken die Verschiebung eines Doppelzapfens (9) verursacht, der in zwei entgegengesetzte Nuten (10) frei gleitet, die in der Seitenfläche eines mit dem zylindrischen Nocken (6) konzentrischen Drehkopfs (8) ausgebildet sind, in dem ein pneumatisch gesteuerter, alternierender Kolben gelagert ist.

2. Stangenstromabnehmer nach Anspruch 1, **dadurch gekennzeichnet, daß** die Stange (5) an der verschwenkbaren Grundplatte (1) angelenkt ist und sich um eine Drehachse (4) zum Aufheben und Absenken dreht, wobei eine Bremseinrichtung (16) auf eine Verlängerung der Drehachse angeordnet ist.

3. Stangenstromabnehmer nach den vorangehenden Ansprüchen, **dadurch gekennzeichnet, daß** die Bremseinrichtung (16) die Ausschlagweite der Stange (5) dann einschränkt bzw. aufhält, wenn der Stangenstromabnehmer von der Leitung abfällt.

4. Stangenstromabnehmer nach den vorangehenden Ansprüchen, **dadurch gekennzeichnet, daß** die verschwenkbare Grundplatte Endanschläge aufweist, wobei passende, profilierte, auf den beiden Enden der Drehachse (4) der Stromabnehmerstange (5) angeordnete Stäbe (11) gegen die Endanschläge anstossen können.

5. Stangenstromabnehmer nach den vorangehenden Ansprüchen, **dadurch gekennzeichnet, daß** das pneumatische Steuergerät (14) auf einer die Stromabnehmerstange (5) abstützenden Strebe angeordnet ist.

6. Stangenstromabnehmer nach den vorangehenden Ansprüchen, **dadurch gekennzeichnet, daß** Lagesensoren vorgesehen sind, die in den von der Stromabnehmerstange (5) angenommenen Lagen Signale erzeugen, die die Bewegung der Stromabnehmerstange steuern.

7. Stangenstromabnehmer nach den vorangehenden Ansprüchen, **dadurch gekennzeichnet, daß** eine elektronische Datenverarbeitungseinheit vorgesehen ist, die das Abfallen des Stangenstromabnehmers von der Leitung durch zeitliche Änderungen ihrer Winkellage erfassen kann.

8. Stangenstromabnehmer nach den vorangehenden Ansprüchen, **dadurch gekennzeichnet, daß** eine elektronische Datenverarbeitungseinheit vorgesehen ist, die das Abfallen des Stangenstromabnehmers von der Leitung durch Änderungen ihrer Schiefe (falls eines Oberleitungsomnibusses) erfassen kann.

## Revendications

1. Trolley pour trolleybus et tramway **caractérisé en ce qu'**il est asservi à un actionneur pneumatique et à un dispositif de centrage, tous les deux gérés par une centrale électronique, étant le premier de type connu et le deuxième constitué d'une came cylindrique montée sur une plaque tournante raccordée à la perche du trolley, ayant cette came une surface latérale constituée de deux "V" opposés, la came avec sa rotation détermine le déplacement d'une double molette libre de glisser dans deux boutonnières opposées, situées longitudinalement sur la surface latérale d'une petite tour concentrique à la came cylindrique à l'intérieur de laquelle agit un piston mû en mode pneumatique.

2. Trolley, selon la revendication précédente, **caractérisé en ce que** la perche dont il est doté est fixée au moyen d'une charnière à la plate-forme tournante à travers un axe autour duquel elle peut tourner pour se soulever et s'abaisser et dans le prolongement duquel est positionné un frein.

3. Trolley, selon les revendications précédentes, **caractérisé en ce que** le frein indiqué dans la revendication 2) contribue à limiter et à bloquer l'excursion de la perche en conditions de glissement de la poulie du trolley.

4. Trolley, selon les revendications précédentes, **caractérisé en ce que** la plaque tournante comporte des blochets de fin de course contre lesquels des bras façonnés placés aux deux extrémités de l'axe de rotation de la perche du trolley peuvent se rencontrer.

5. Trolley, selon les revendications précédentes, **caractérisé en ce que** l'actionneur pneumatique est placé sur un axe qui sous-tend la perche du trolley.

6. Trolley, selon les revendications précédentes, **caractérisé en ce qu'**il est muni de capteurs de position spéciaux en mesure de signaler les positions adoptées par la perche et de donner l'autorisation à son déplacement.

7. Trolley, selon les revendications précédentes, **caractérisé en ce qu'**il est muni de logique électronique spéciale en mesure d'évaluer, au moyen de variation dans le temps de la position angulaire, les conditions de glissement de la poulie.

8. Trolley, selon les revendications précédentes, **caractérisé en ce qu'**il est muni de logique électronique spéciale en mesure d'évaluer, dans le cas de plusieurs perches (voir trolleybus), conditions de glissement de la poulie au moyen de la variation relative des inclinaisons.
